# EUROPEAN PATENT APPLICATION

(11) **EP 3 567 893 A1**
(43) Date of publication of application: **13.11.2019**
(21) Application number: 18736588.7
(22) Date of filing: 05.01.2018
(51) Int. Cl.: H04W 16/28, H01Q 3/24, H01Q 25/00, H04B 7/06, H04B 7/08, H04W 24/10, H04W 88/02

(54) **USER TERMINAL AND WIRELESS COMMUNICATION METHOD**

(30) Priority: 06.01.2017 JP 2017001436
(71) Applicant: NTT DOCOMO, INC., Chiyoda-ku Tokyo 100-6150 (JP)
(72) Inventor: TAKEDA, Kazuaki, Tokyo 100-6150 (JP); NAGATA, Satoshi, Tokyo 100-6150 (JP); NA, Chongning, Beijing 100190 (CN); LIU, Min, Beijing 100190 (CN); JIANG, Huiling, 100190 (CN); KAKISHIMA, Yuichi, Palo Alto California 94304 (US)
(74) Representative: Hoffmann Eitle
(86) International application number: PCT/JP2018/000050
(87) International publication number: WO 2018/128180

(57) **Abstract**

The invention is designed to switch beams quickly. A user terminal, according to the present invention, has a receiving section that receives a downlink (DL) signal, and a control section that controls a beam to use to transmit and/or receive the DL signal. When the DL signal is transmitted and/or received using one or more candidate beams, the control section selects the beam based on the measurement results of the demodulation reference signals of one or more antenna ports that respectively correspond to the one or more candidate beams.

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "New RAT (Radio Access Technology)," "FX (Future generation radio access)," "LTE Rel. 13," "LTE Rel. 14," "LTE Rel. 15" or later versions) are under study.

In LTE Rel. 10/11, carrier aggregation (CA) to integrate multiple component carriers (CC) is introduced in order to achieve broadbandization. Each CC is configured with the system bandwidth of LTE Rel. 8 as one unit. In addition, in CA, multiple CCs under the same radio base station (eNB: eNodeB) are configured in a user terminal (UE: User Equipment).

Meanwhile, in LTE Rel. 12, dual connectivity (DC), in which multiple cell groups (CGs) formed by different radio base stations are configured in a UE, is also introduced. Each cell group is comprised of at least one cell (CC). Since multiple CCs of different radio base stations are aggregated in DC, DC is also referred to as "inter-base station CA (inter-eNB CA)."

In existing LTE systems (for example, LTE Rel. 8 to 13), a user terminal receives downlink control information (DCI) via a downlink control channel (for example, PDCCH: Physical Downlink Control Channel, EPDCCH: Enhanced Physical Downlink Control Channel, MPDCCH: Machine type communication (MTC) Physical Downlink Control Channel, etc.). The user terminal receives a DL data channel (for example, PDSCH: Physical Downlink Shared Channel) based on this DCI.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, 5G, NR, etc.), research is being made to use frequency bands (for example, 3 to 40 GHz) higher than existing frequency bands in order to achieve high speeds and large capacity (for example, eMBB (enhanced Mobile Broad Band)). In general, distance-induced attenuation increases as the frequency band increases, and this makes it difficult to ensure coverage. Therefore, MIMO (also referred to as "Multiple Input Multiple Output," "massive MIMO," and so on) using a large number of antenna elements is under study.

In MIMO, in which a large number of antenna elements are used, it is possible to form beams (antenna directivities) by controlling the amplitude and/or the phase of signals to be transmitted or received via each antenna element (beam forming (BF)). For example, when antenna elements are arranged two-dimensionally, the higher the frequency, the greater the number of antenna elements that can be arranged in a predetermined area (the number of antenna elements) increases. As the number of antenna elements per given area increases, the beam width narrows (becomes narrower), and the beam forming gain increases. Therefore, when beam forming is adopted, propagation loss (path loss) can be reduced and coverage can be ensured even in high frequency bands.

Meanwhile, when using beam forming (for example, when it is assumed that a narrower beam is used in a high frequency band), blockage caused by obstacles and/or the like might cause a deterioration of beams and link disconnections, providing a factor of a deterioration of system performance. Therefore, it is important to switch (recover) beams quickly.

The present invention has been made in view of the above, and it is therefore an object of the present invention to provide a user terminal and a radio communication method, whereby beams can be switched quickly.

### Solution to Problem

According to one aspect of the present invention, a user terminal has a receiving section that receives a downlink (DL) signal, and a control section that controls a beam to use to transmit and/or receive the DL signal, and, when the DL signal is transmitted and/or received using one or more candidate beams, the control section selects the beam based on the measurement results of the demodulation reference signals of one or more antenna ports that respectively correspond to the one or more candidate beams.

### Advantageous Effects of Invention

According to the present invention, beams can be switched quickly.

### Brief Description of Drawings

FIGs. 1A to 1C are conceptual diagrams, each showing an example of the first beam control;
FIG. 2 is a diagram to show an example of radio resource allocation in the first beam control;
FIGs. 3A to 3C are conceptual diagrams, each showing an example of second beam control;
FIG. 4 is a diagram to show an example of radio resource allocation in the second beam control;
FIG. 5 is a sequence diagram to show an example of a beam control operation;
FIGs. 6A and 6B are diagrams to show examples of transmission mode information;
FIG. 7 is a diagram to show an example of a schematic structure of a radio communication system according to the present embodiment;
FIG. 8 is a diagram to show an example of an overall structure of a radio base station according to the present embodiment;
FIG. 9 is a diagram to show an example of a functional structure of a radio base station according to the present embodiment;
FIG. 10 is a diagram to show an example of an overall structure of a user terminal according to the present embodiment;
FIG. 11 is a diagram to show an example of a functional structure of a user terminal according to the present embodiment; and
FIG. 12 is a diagram to show an example hardware structure of a radio base station and a user terminal according to the present embodiment.

### Description of Embodiments

Future radio communication systems (for example, 5G, NR, etc.) presume use cases characterized by, for example, high speed and large capacity (for example, eMBB), a very large number of terminals (for example, massive MTC (Machine Type Communication)), ultra-high reliability and low latency (for example, URLLC (Ultra Reliable and Low-Latency Communications), and so on. Assuming these use cases, for example, studies are in progress to communicate using beam forming (BF) in future radio communication systems.

The beam forming (BF) includes a digital BF and an analog beam BF. Digital BF refers to a method of performing precoding signal processing on the baseband (for digital signals). In this case, inverse fast Fourier transform (IFFT)/digital-to-analog conversion (DAC)/RF (Radio Frequency) need to be carried out in parallel processes, as many as the number of antenna ports (RF Chains). Meanwhile, it is possible to form a number of beams according to the number of RF chains at an arbitrary timing.

Analog BF refers to a method of using phase shifting devices on RF. In this case, since it is only necessary to rotate the phase of RF signals, analog BF can be realized with simple and inexpensive configurations, but it is nevertheless not possible to form a plurality of beams at the same time. To be more specific, when analog BF is used, each phase shifting device can only form one beam at a time.

Thus, if a radio base station (referred to as, for example, "gNB (gNodeB)," "transmission and reception point (TRP)," "eNB (eNode B)," "base station (BS)," and so on) has only one phase shifter, the radio base station can only form one beam at any given time. Therefore, when multiple beams are transmitted using analog BF alone, these beams cannot be transmitted simultaneously using the same resources, and the beams need to be switched, rotated and so on, over time.

Note that it is also possible to adopt a hybrid BF configuration which combines digital BF and analog BF. Although, for future radio communication systems (for example, 5G, NR, etc.), a study is under way to introduce MIMO (for example, massive MIMO), which uses a large number of antenna elements, attempting to form an enormous number of beams using digital BF alone might lead to expensive circuit structures. For this reason, there is a possibility that hybrid BF will be used in future radio communication systems.

Also, for example, closed loop control based on feedback information from the user terminals, open loop control using a predetermined precoding matrix based on feedback information from the user terminals, and semi-open loop control in which a predetermined precoding matrix is used and feedback information is acquired from the user terminals are possible beam control methods that may be applied to DL signals (for example, a DL data channel). The feedback information from a user terminal includes, for example, at least one of a precoding matrix indicator (PMI), a rank indicator (RI), and a channel quality indicator (CQI).

When using BF (including digital BF, analog BF and hybrid BF) such as described above (for example, when it is assumed that a narrower beam is used in a high frequency band), interference by obstacles may cause beam degradation and link interruption, which may provide a factor of deterioration in system performance. Therefore, it is important to switch (recover) beams quickly.

So, the present inventors have studied ways to switch (recover) beams quickly and have arrived at the present invention. To be more specific, the present inventors have come up with the idea of quickly switching (recovering) beams by using a transmission mode for beam selection as a transmission mode to apply to DL signals (for example, a DL data channel).

Now, embodiments of the present invention will be described below in detail with reference to the accompanying drawings. Note that although the beam forming in the following present embodiment assumes digital BF, analog BF and hybrid BF can be applied as appropriate.

Also, a "beam" as used in the present embodiment may be paraphrased as a "DMRS port," a "reference signal antenna port," an "antenna port" and so on. A DMRS port is an antenna port of a reference signal (also referred to as "demodulation reference signal," "DMRS," and so on) that is used to demodulate a DL channel (a DL data channel and/or a DL control channel), and may be associated with a unique beam. Note that the DMRS sequence may vary between different DMRS ports, and/or at least one of the frequency resources, the time resources and the code resources (for example, OCC: Orthogonal Cover Code) where the DMRS is arranged, and/or the cyclic shift (CS), may vary. Also, "beams" may be identified by varying directivities (precoding matrix) applied to the same DMRS.

Also, "beams" according to the present embodiment may include beams that are used to transmit DL signals from radio base stations (also referred to as "transmitting beams," "Tx beams," and so on) and/or beams that are used to receive DL signals at user terminals (also referred to as "receiving beams," "Rx beams," and so on). The combinations of transmitting beams and receiving beams may be referred to as "beam pair links (BPLs)" and/or the like.

### (Beam Control)

In the present embodiment, a user terminal controls the beams that are used to transmit and/or receive DL signals (active beams and/or backup beams). Here, an "active beam" is a beam in which a DL signal is transmitted and/or received. A backup beam is a beam being a candidate for transmitting/receiving a DL signal (candidate beam).

To be more specific, a radio base station transmits a DL signal using one or more backup beams at a predetermined timing (for example, when detecting a deterioration of an active beam). When a DL signal is transmitted and/or received using one or more backup beams, the user terminal selects the active beam among these candidate beams based on the measurement result of the DMRSs of one or more DMRS ports (antenna ports) that correspond to the one or more backup beams respectively.

### <First Beam Control>

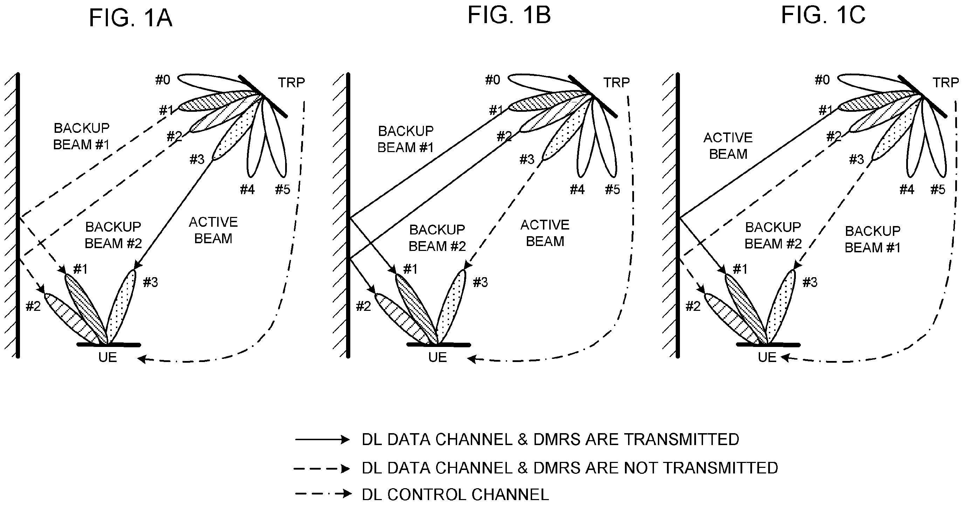

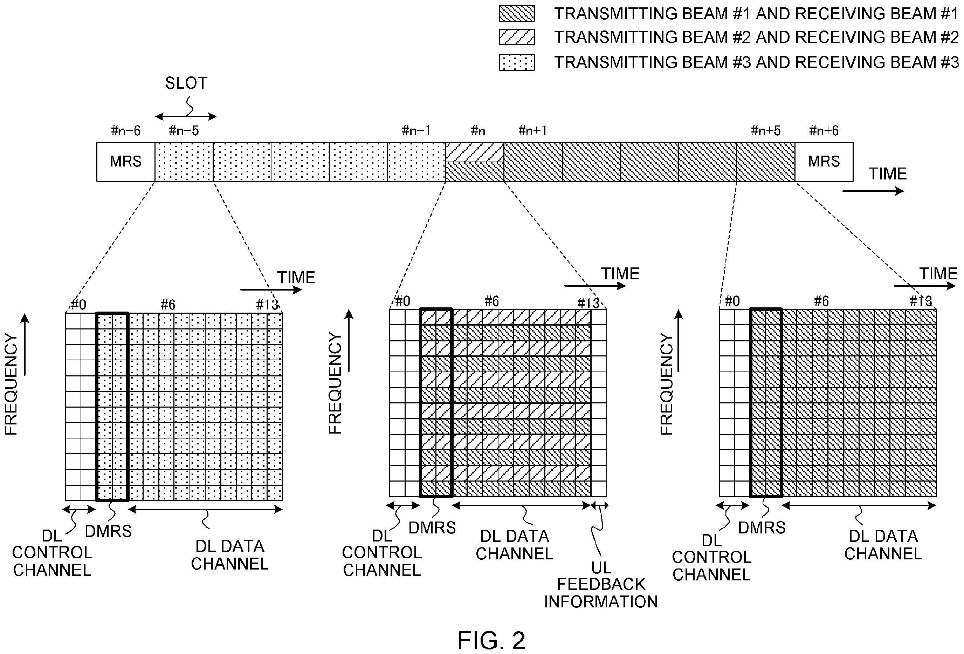

With reference to FIGs. 1 and FIG. 2, examples of first beam control according to the present embodiment will be described. According to the first beam control, a DL control channel is transmitted using one or more beams, independent of a DL data channel, in order to ensure robustness. Alternatively, a DL control channel may be transmitted using another carrier that provides sufficient coverage. A user terminal may monitor (blind-decode) a plurality of DL control channel candidates provided in one or more beams in the search space, and detect DCI that is addressed to the user terminal. The user terminal can decide the beams to use to transmit and/or receive a DL data channel and the DMRS, based on beam information contained in this DCI (for example, a beam index (BI) and/or a DMRS port indicator (DPI)).

FIGs. 1 are conceptual diagrams, each showing an example of first beam control. In FIGs. 1A to 1C, the active beam is structured to include both a transmitting beam from the radio base station and a receiving beam at the user terminal, but the active beam may include only one of the transmitting beam and the receiving beam. The same applies to backup beams. The number of active beams and backup beams which the user terminal can use is not limited to those shown in FIGs. 1A to 1C, and has only to be one or more.

For example, FIG. 1A shows one active beam (transmitting beam #3 and receiving beam #3) and two backup beams #1 (transmitting beam #1 and receiving beam #1) and #2 (transmitting beam #2 and receiving beam #2). In FIG. 1A, the radio base station transmits a DL data channel and a DMRS using the active beam, and the user terminal receives the DL data channel and the DMRS using this active beam.

The radio base station may switch the transmission mode of the DL data channel to a transmission mode for beam selection (also referred to as "beam cycling," "DMRS port cycling," and so on) at a predetermined timing (for example, when the quality of the active beam of FIG. 1A worsens than a predetermined quality, in a predetermined cycle, etc.). To be more specific, as shown in FIG. 1B, the radio base station can switch the beam to use to transmit and/or receive the DL data channel and the DMRS from the active beam to the backup beams.

In FIG. 1B, the user terminal measures the DMRS of two DMRS ports that correspond to backup beams #1 and #2, respectively. The user terminal selects backup beam #1 (transmitting beam #1 and receiving beam #1) based on the measurement results of the two DMRS ports. The user terminal feeds back beam information for backup beam #1 (for example, the beam index (BI) or the DMRS port indicator (DPI) corresponding to backup beam #1). Furthermore, the user terminal may feed back measurement result (for example, the reference signal received power (RSRP)) of the DMRS port corresponding to backup beam #1.

In FIG. 1C, the radio base station switches backup beam #1 of FIG. 1B to the active beam based on the beam information fed back from the user terminal, and transmits the DL data channel and the DMRS using this active beam.

FIG. 2 is a diagram showing an example of radio resource allocation in the first beam control. In FIG. 2, slots #n-5 to #n-1 show an example of radio resource allocation in accordance with FIG. 1A, slot #n shows an example of radio resource allocation in accordance with FIG. 1B, and slots #n+1 to #n+ 5 show an example of radio resource allocation in accordance with FIG. 1C.

Note that, in FIG. 2, one or more transmission beams are allocated to the DL control channel, independently of the DL data channel and the DMRS, and therefore the beams allocated to the DL control channel are not illustrated. Furthermore, in FIG. 2, the reference signal for beam search (mobility reference signal (MRS)) may be transmitted in a predetermined cycle.

Furthermore, the field where the DMRS is arranged (DMRS pattern), shown in FIG. 2, is simply an example, and this is by no means limiting. Furthermore, the DMRS may be arranged in at least one time and/or frequency resource in the area where it is arranged, and needs not be arranged in all. Also, a plurality of different DMRSs may be code-division-multiplexed in the same time and frequency resource.

In slots #n-5 to #n-1 of FIG. 2, transmitting beam #3 and receiving beam #3 are the active beam (FIG. 1A). Therefore, in slots #n-5 to #n-1, the active beam (transmitting beam #3 and receiving beam #3) is used to transmit and receive the DL data channel and the DMRS in all frequency resources (also referred to as "one or more physical resource blocks (PRBs)" or "one or more resource blocks," and so on) allocated to the DL data channel.

Meanwhile, in slot #n in FIG. 2, the transmission mode of the DL data channel is switched to the transmission mode for beam selection. Therefore, in varying frequency resources that are allocated to the DL data channel in slot #n, backup beam #1 (transmitting beam #1 and receiving beam #1) and backup beam #2 (transmitting beam #2 and receiving beam #2) are used to transmit and receive the DL data channel and the DMRS.

Thus, in the transmission mode for beam selection, multiple backup beams (here, #1 and #2) can be used to transmit and receive the same DL data channel and DMRS in different frequency resources within the same slot. In FIG. 2, the transmission mode for beam selection is applied slot #n alone, but can be applied to a plurality of slots as well. The user terminal selects backup beam #1 based on the measurement results of the two DMRS ports corresponding to backup beams #1 and #2.

Furthermore, in the last symbol of slot #n of FIG. 2, beam information to represent selected backup beam #1 may be transmitted using a UL data channel or a UL control channel. In this case, slot #n may be referred to as a "self-contained slot" or the like. Although not shown in the drawing, this beam information may be fed back in subsequent slot #n+X (X>0) in slot #n. In this case, slot #n may be referred to as a "non-self-contained slot" or the like.

In slots #n+1 to #n+5 of FIG. 2, backup beam #1, selected in slot #n, is switched to the active beam (transmitting beam #1 and receiving beam #1), and this active beam is used to transmit and receive the DMRS of the DL data channel in all frequency resources allocated to the DL data channel (FIG. 1C).

According to the first beam control, one backup beam (for example, backup beam #1 or #2 in FIG. 1B) is selected in the transmission mode for beam selection, so that the beam can be selected easily, compared to the case where all beams (for example, transmitting beams #1 to #5 in FIG. 1A) are swept (beam sweeping).

Furthermore, according to the first beam control, in the transmission mode for beam selection, a plurality of backup beams are allocated to different frequency resources in the same slot, so that the measurements of a plurality of DMRS ports, which is required in beam selection, can be performed within the same slot. Therefore, it is possible to quickly switch degraded active beams.

### <Second Beam Control>

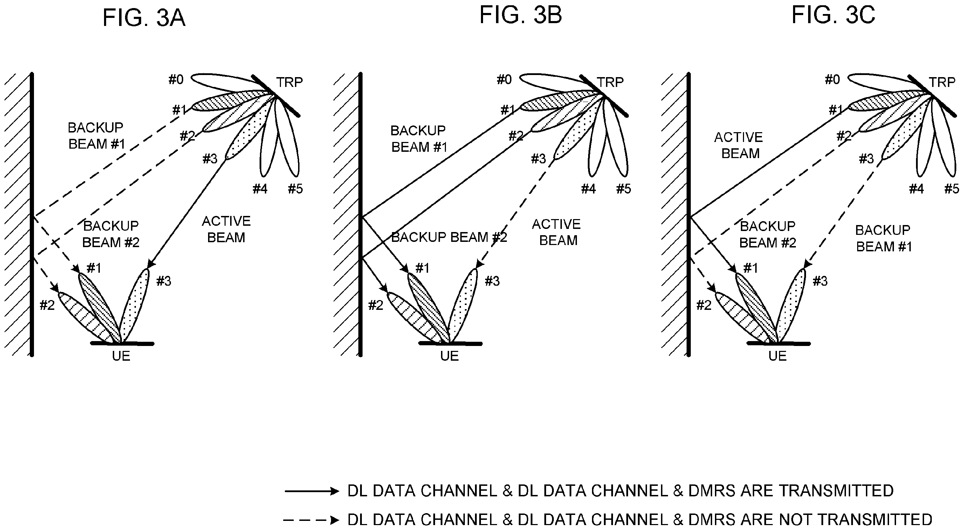

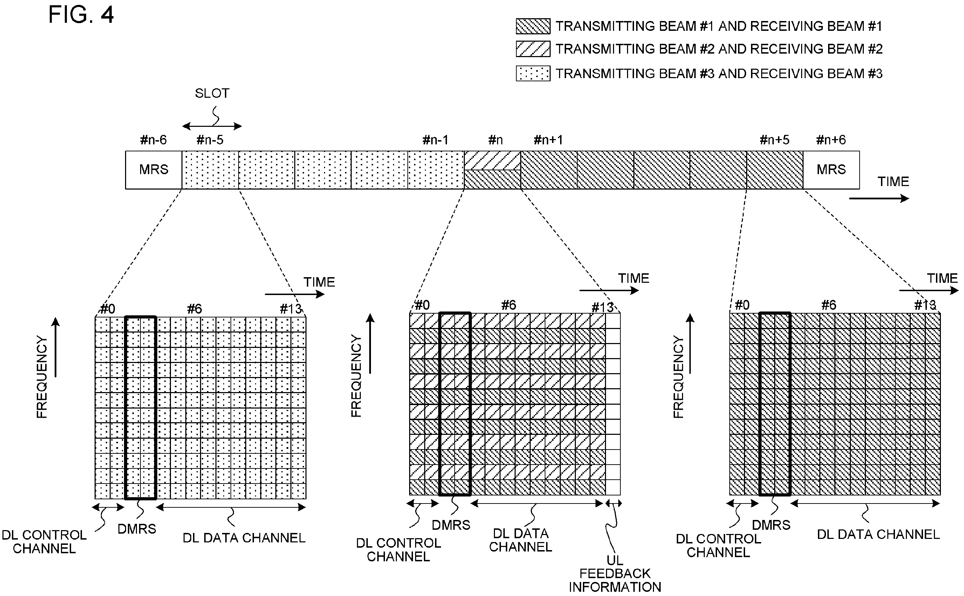

With reference to FIGs. 3 and 4, examples of second beam control according to the present embodiment will be described. The second beam control differs from the first beam control in that the DL control channel is transmitted using the same active beam as that of the DL data channel and the DMRS. Hereinafter, the second beam control will be described focusing on differences from the first beam control.

In the second beam control, the user terminal can monitor (blind-decode) a plurality of DL control channel candidates provided in an active beam and a backup beam, and detect DCI that is addressed to the user terminal. The user terminal may receive the DL data channel and the DMRS using the beam including the DL control channel candidate where the DCI is detected.

FIG. 3 is a conceptual diagram showing an example of the second beam control according to the present embodiment. Note that the active beam and the backup beam shown in FIGs. 3A to 3C are the same as in FIGs. 1A to 1C.

In FIG. 3A, the user terminal monitors a plurality of DL control channel candidates provided in the active beam and backup beams #1 and #2, and detects DCI addressed to the user terminal in a DL control channel candidate provided in the active beam. The user terminal receives the DL data channel and the DMRS using the active beam. Note that FIGs. 3B and 3C are the same as FIGs. 1B and 1C except for the DCI detection operation.

FIG. 4 is a diagram to show an example of radio resource allocation in the second beam control according to the present embodiment. In FIG. 4, slots #n-5 to #n-1 show an example of radio resource allocation in accordance with FIG. 3A, slot #n shows an example of radio resource allocation in accordance with FIG. 3B, and slots #n+1 to #n+5 show an example of radio resource allocation in accordance with FIG. 3C.

In the second beam control, the DL control channel is transmitted using the same beam as that of the DL data channel and the DMRS. Therefore, in slots #n-5 to #n-1 of FIG. 4, the same active beam (transmitting beam #3 and receiving beam #3) as that of the DL data channel and the DMRS is used to transmit and receive the DL control channel in the first two symbols.

The transmission mode for beam selection is applied to slot #n of FIG. 4. Therefore, in varying frequency resources that are allocated to the DL data channel, backup beam #1 (transmitting beam #1 and receiving beam #1) and backup beam #2 (transmitting beam #2 and receiving beam #2) are used to transmit and receive the DL data channel, the DMRS and the DL control channel.

In the slots #n+1 to #n+5 of FIG. 4, the same active beam (transmitting beam #1 and receiving beam #1) as that of the DL data channel and the DMRS is used to transmit and receive the DL control channel in the first two symbols.

According to the second beam control, the DL control channel is transmitted using the same beam as that of the DL data channel and the DMRS, so that the overhead associated with the reporting of beams for transmitting and/or receiving the DL data channel can be reduced.

### (Beam Control Operation)

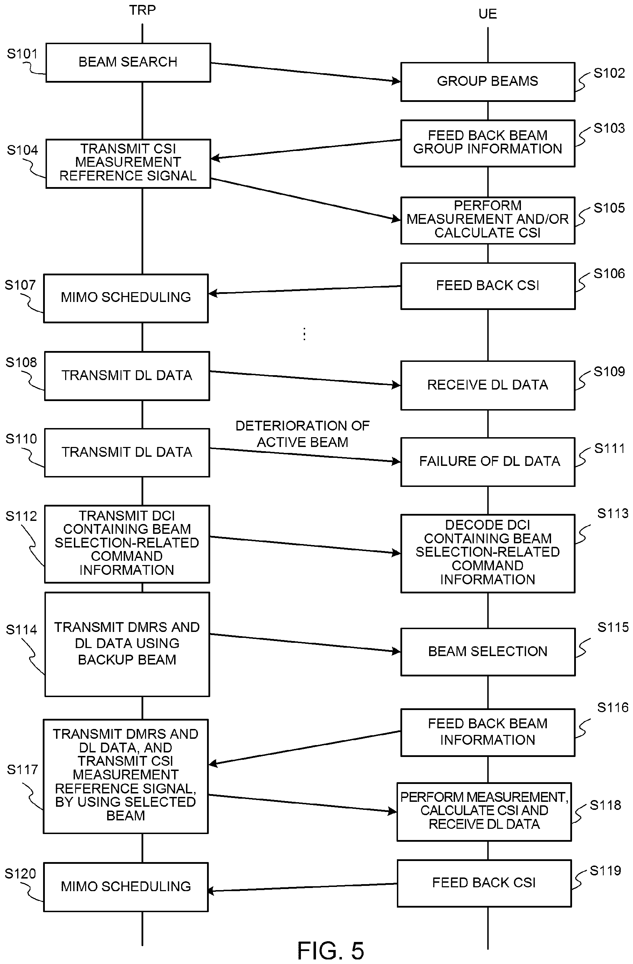

Referring to FIG. 5, the beam control operation at the radio base station and the user terminal is described below. FIG. 5 is a sequence diagram to show an example of a beam control operation. FIG. 5 is only an example, and some steps may be omitted or repeated. Furthermore, the following operation can be applied to both the first beam control and the second beam control.

As shown in FIG. 5, the radio base station (TRP) performs a beam search in a predetermined cycle (step S101). Note that, for example, a mobility reference signal (MRS) may be used in this search, and, in step S101, the radio base station may transmit the MRS.

The user terminal classifies the beams (grouping of beams) that fulfill predetermined conditions into active beams and backup beams (step S102). For example, the user terminal may decide to classify each beam as an active beam or a backup beam based on the received quality and/or the correlation of each beam. For example, in FIG. 1A and FIG. 3A, {transmitting beam #3 and receiving beam #3} are classified as an active beam, and {transmitting beam #1 and receiving beam #1} and {transmitting beam #2 and receiving beam #2} are classified as backup beams.

The user terminal feeds back information (beam group information) representing the active beam and/or the backup beams classified in step S102, to the radio base station (step S103). For example, the beam group information may include the beam index and/or the DMRS port indicator of a transmitting beam and/or a receiving beam that is classified as an active beam and/or a backup beam. Also, the beam group information may include the RSRP (for example, the RSRP of the MRS) of this transmitting beam and/or receiving beam.

The radio base station transmits a reference signal (which is a measurement reference signal such as, for example, a CSI-RS (Channel State Information-Reference Signal)) for measuring channel state information (CSI) based on the beam group information fed back from the user terminal (step S104). This measurement reference signal may be transmitted aperiodically, periodically or semi-persistently.

The user terminal makes measurements and/or calculates CSI based on the measurement reference signal from the radio base station (step S105). The user terminal feeds back the CSI to the radio base station based on the measurement result and/or the calculation result (step S106). This CSI includes at least one of a precoding matrix indicator (PMI) that can be applied to a DL signal, a rank indicator (RI) (the number of layers) applicable to the DL signal, a channel quality indicator (CQI), a beam index (BI) and a DMRS port indicator (DPI).

The radio base station performs scheduling (for example, MIMO (Multiple-Input and Multiple-Output) scheduling)) based on the CSI (for example, the PMI, the RI and the CQI) fed back from the user terminal (step S107). To be more specific, the radio base station determines the active beam based on the CSI.

The radio base station transmits a DL data channel using the active beam (step S108). The user terminal monitors (blind-decodes) a plurality of DL control channel candidates, detects DCI that is addressed to the user terminal, and receives the DL data channel based on the DCI (step S109).

In steps S106 to S109, the beam control for the DL data channel relies on feedback information from the user terminal, so that a transmission mode for closed loop control is employed. Note that steps S106 to S109 may be repeated.

When the quality of an active beam falls below predetermined quality, if the radio base station transmits DL data using this active beam (step S110), the user terminal fails to receive the DL data channel (step Sill).

The radio base station switches the transmission mode (DMRS-based semi-open loop control) of the DL data channel from a transmission mode for closed loop control to a transmission mode for beam selection (also referred to as "beam cycling," "DMRS port cycling," and so on) at a predetermined timing (here, when a drop is detected in the quality of an active beam), and transmits DCI that includes command information pertaining to this beam selection (step S112).

The user terminal blind-decodes this DCI (step SI13). This command information may include at least one of transmission mode information (described later), DMRS pattern information (described later), and CSI-related information (described later).

The radio base station transmits the DMRS and the DL data channel using the backup beams (step S114). For example, in FIGs. 1B and FIG. 3B, the same DL data channel is transmitted in backup beams #1 and #2. As shown in FIGs. 2 and FIG. 4, backup beams #1 and #2 may be allocated to different frequency resources within the same slot.

The user terminal performs beam selection (step S115). To be more specific, the user terminal may recognize that the transmission mode of the DL data channel has been switched to the transmission mode for beam selection, based on the transmission mode information (described later) decoded in step S113. Also, based on the DMRS pattern information (described later) decoded in step S113, the user terminal may measure the RSRPs of multiple DMRS ports corresponding to multiple backup beams (backup beams #1 and #2 in FIGs. 1 B and 3 B), and select one or more backup beams based on the measurement results.

The user terminal feeds back beam information indicating the selected backup beams (for example, BIs and/or DPIs), to the radio base station (step S116). Furthermore, the user terminal may feed back the RSRPs of the DMRS ports corresponding to the selected backup beams to the radio base station. The information that is fed back may be determined based on the CSI-related information (described later) decoded in step S113. Furthermore, the feedback of step S116 may be sent in the same slot as the slot beam selection was performed in step 115, or may be performed in a subsequent slot (FIGs. 2 and FIG. 4).

The radio base station transmits the DMRS and DL data, and, furthermore, transmits a CSI measurement reference signal (for example, a CSI-RS) using the active beam that has been switched based on the feedback information from the user terminal (step S117). In step S117, the transmission mode of the DL data channel is switched from the beam selection transmission mode back to the closed loop control transmission mode (DMRS-based semi-open loop control).

The user terminal performs measurements and/or calculates CSI based on the measurement reference signal from the radio base station, and receives the DL data (step S118). The user terminal feeds back CSI (for example, at least one of the PMI, the RI and the CQI in the band specific to the user terminal) to the radio base station, based on the measurement result and/or the calculation result (step S119). The radio base station performs scheduling based on the CSI that is fed back (step S120).

According to the above-described beam control operation, the transmission mode for the DL data channel is switched to the transmission mode for beam selection on a temporary basis, so that the DL data channel and the DMRS are transmitted in each backup beam, and beams are selected based on the measurement result of the DMRS of the DMRS port corresponding to each backup beam. Accordingly, it is possible to select beams without waiting for beam search of a predetermined cycle, which uses the MRS, and switch the active beam quickly

### (Transmission Mode Information)

The transmission mode information decoded in step S113 of FIG. 5 will be described in detail below. The transmission mode information is information related to the transmission mode for DL signals (for example, a DL data channel), and used to trigger the transmission mode for beam selection.

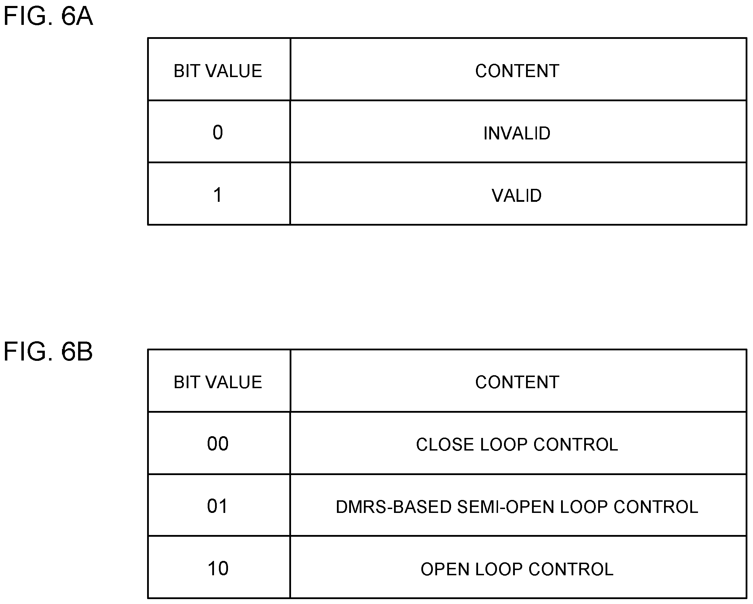

FIG. 6 is a diagram to show an example of transmission mode information according to the present embodiment. As shown in FIG. 6A, the 1-bit-transmission mode information may indicate whether the transmission mode (transmission mode for DMRS-based semi-open loop control) for beam selection is valid or invalid.

Meanwhile, as shown in FIG. 6B, the 2-bit-transmission mode information may indicate the beam control method applied to apply to DL signals (for example, a DL data channel). For example, FIG. 6B shows closed loop control, DMRS-based semi-open loop control (synonymous with the beam selection described above), and open loop control. When the transmission mode information decoded in step S113 of FIG. 5 indicates the DMRS-based semi-open loop control, the user terminal may perform the beam selection as described above.

Note that the transmission mode information may be three bits or more. Furthermore, the transmission mode information may be included in DCI or may be included in control information (for example, MAC CE) that is transmitted by higher layer signaling.

### (DMRS Pattern Information)

Next, the DMRS pattern information decoded in step S113 of FIG. 5 will be described in detail. The DMRS pattern information is information that indicates the DMRS pattern that is used in DMRS measurement.

Here, the DMRS pattern specifies the locations where the DMRSs of one or more DMRS ports are arranged. The DMRSs of multiple DMRS ports may be multiplexed in different time resources and/or different frequency resources within a DMRS pattern. Furthermore, the DMRSs of multiple DMRS ports may be code-division-multiplexed in the same time resource and frequency resource.

Such DMRS patterns may be designated in one step or may be specified in multiple steps. In one step, a single DMRS pattern is specified for the user terminal using either RRC signaling, MAC CE or DCI.

On the other hand, in the case of multiple steps, a set of one or more DMRS patterns (for example, a set of DMRS patterns that support high Doppler frequencies) is configured by RRC signaling, and one DMRS pattern is selected from this RRC-configured set, by MAC CE or by DCI.

### (CSI-Related Information)

Next, the CSI-related information decoded in step S113 of FIG. 5 will be described in detail. The CSI-related information may include at least one of information that requests aperiodic CSI measurement and/or reporting (CSI trigger information) and information that indicates the content (feedback mode) of CSI that requests feedback (feedback mode information).

The CSI trigger information may be a 1-bit value that requests DMRS-based CSI measurement and/or reporting, or may be joint-encoded with the above-described DMRS pattern information, or joint-encoded with the transmission mode information described above.

The feedback mode information may indicate at least the following feedback modes:
Mode 1-1: Mode to feed back DMRS port indicator (DPI)
Mode 1-2: Mode to feed back DPI and corresponding RSRP
Mode 1-3: Mode to feed back DPI, corresponding RSRP, and identification information of corresponding receiving beam

Note that beam-based DPIs or port-based DPIs may be used. When beam-based DPIs are used, the user terminal may calculate the power of beams based on different polarized waves (polarization) and feed back some of the port indices. Also, if port-based DPIs are used, the user terminal may feed back the port index corresponding to the maximum beam power, without considering the polarized waves (polarization). Also, the DPIs may be replaced with beam indices (BI).

The above-described CSI-related information may be fed back using the UL control channel in the symbol at a predetermined position in the slot (for example, the last symbol). The relevant CSI-related information may be joint-encoded with DL data channel delivery acknowledgment information (HARQ-ACK, A/N and so on).

### (Radio Communication System)

Now, the structure of a radio communication system according to the present embodiment will be described below. In this radio communication system, communication is performed using one or a combination of the radio communication methods according to the herein-contained embodiments of the present invention.

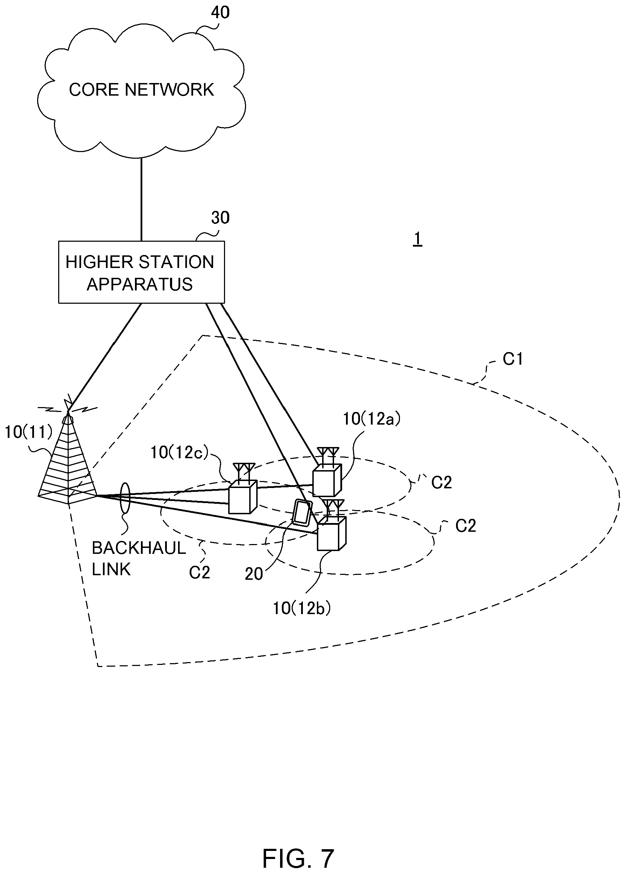

FIG. 7 is a diagram to show an example of a schematic structure of a radio communication system according to present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

In the radio communication system 1, a radio base station using a plurality of types of beam forming communicates with a user terminal, where the user terminal transmits a random access preamble (PRACH) including beam information that relates to the beams of the radio base station, and the radio base station receives this PRACH containing the beam information.

The radio communication system 1 includes a radio base station 11 that forms a macro cell C1 having a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication is carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3 to 40 GHz) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data and higher layer control information are communicated by the PUSCH. Also, downlink radio quality information (CQI: Channel Quality Indicator), delivery acknowledgement information and so on are communicated by the PUCCH. By means of the PRACH, random access preambles for establishing connections with cells are communicated.

In the radio communication systems 1, the cell-specific reference signal (CRS: Cell-specific Reference Signal), the channel state information reference signal (CSI-RS: Channel State Information-Reference Signal), the demodulation reference signal (DMRS: DeModulation Reference Signal), the positioning reference signal (PRS: Positioning Reference Signal) and so on are communicated as downlink reference signals. Also, in the radio communication system 1, the measurement reference signal (SRS: Sounding Reference Signal), the demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

The radio base station, using multiple types of beam forming, transmits a DL signal to a user terminal, receives a random access preamble (PRACH) that includes beam information related to the beam of the radio base station detected based on the DL signal.

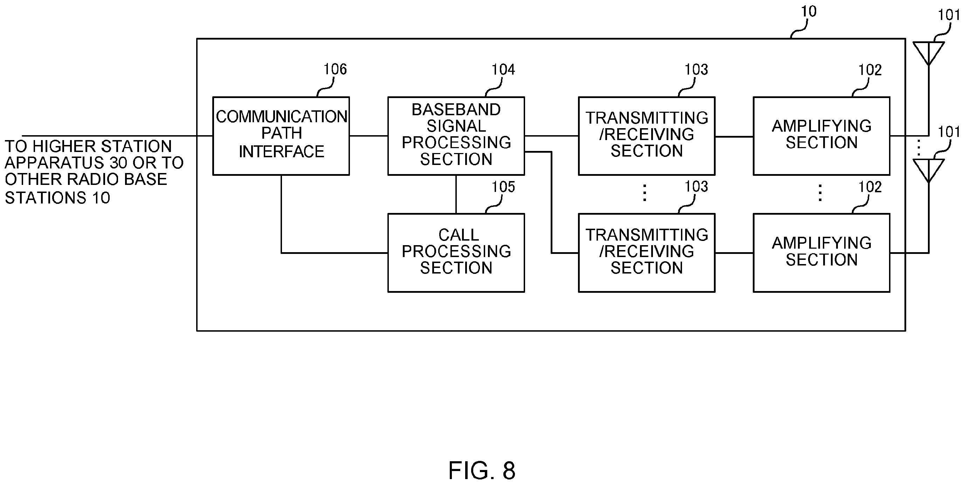

FIG. 8 is a diagram to show an example of an overall structure of a radio base station according to present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beam forming section that forms analog beams. The analog beam forming section may be constituted by an analog beam forming circuit (for example, a phase shifter, a phase shifting circuit, etc.) or analog beam forming apparatus (for example, a phase shifting device) that can be described based on general understanding of the technical field to which the present invention pertains. Furthermore, the transmitting/receiving antennas 101 may be constituted by, for example, array antennas. In addition, the transmitting/receiving sections 103 are structured so that single-BF or multiple-BF operations can be used.

The transmitting/receiving sections 103 receive DL signals (for example, at least one of a DL control channel, a DL data channel and a DMRS) and transmits UL signals (for example, a UL control channel and a UL data channel). In addition, the transmitting/receiving sections 103 transmit command information related to beam selection through higher layer signaling and/or physical layer signaling. The command information may include at least one of the above-described transmission mode information, DMRS pattern information, and CSI-related information.

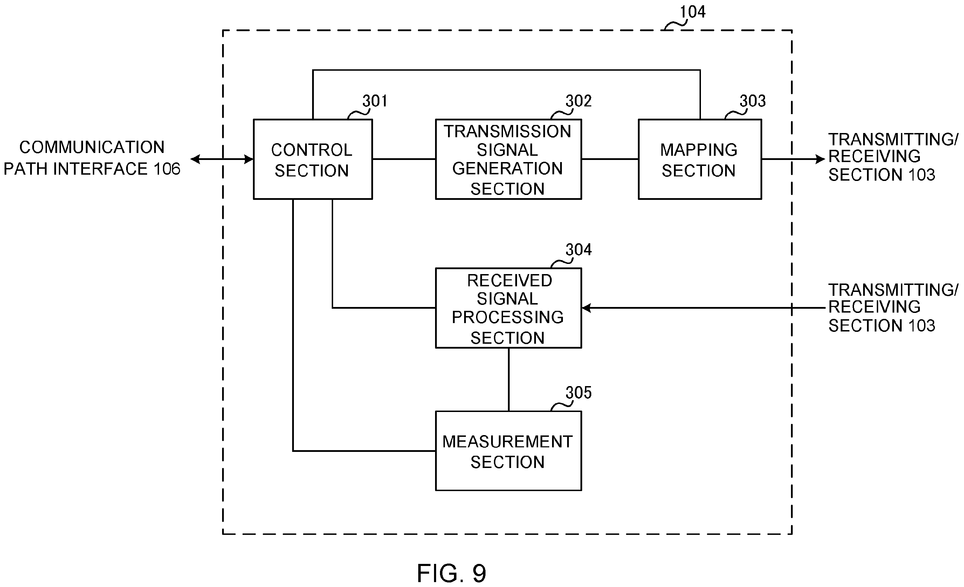

FIG. 9 is a diagram to show an example of a functional structure of a radio base station according to present embodiment. Note that, although this example primarily shows functional blocks that pertain to characteristic parts of present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling of downlink reference signals (system information, DL data channels, UL data channels, the CRS, the CSI-RS, the DMRS, etc.).

The control section 301 may exert control so that Tx beams and/or Rx beams are formed using digital BF (for example, precoding) by the baseband signal processing section 104 and/or analog BF (for example, phase rotation) by the transmitting/receiving sections 103.

In addition, the control section 301 may control the transmission modes to be applied to DL signals (for example, a DL data channel). These transmission modes include at least one of a transmission mode for executing closed loop control, a transmission mode for beam selection (transmission mode for DMRS-based semi-open loop control), and a transmission mode for executing open loop control.

The control section 301 controls the beams to use in transmitting and/or receiving DL signals. To be more specific, the control section 301 may control the transmission of DL signals and DMRSs using one or more backup beams, in the transmission mode for beam selection (the transmission mode for DMRS-based semi-open loop control).

Also, when DL signals are transmitted and/or received using different backup beams, the control section 301 may allocate different frequency resources within the same slot. Furthermore, the control section 301 may switch the active beam that is used to transmit and/or receive DL signals, based on feedback information from the user terminal 20.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and the beam forming process (precoding process), by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when feedback information (for example, CSI, HARQ-ACK, etc.) arrives from the user terminal, this feedback information is output to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

When signals are received, the measurement section 305 may measure, for example, the received power (for example, RSRP (Reference Signal Received Power)), the received quality (for example, RSRQ (Reference Signal Received Quality)), SINR (Signal to Interference plus Noise Ratio), channel states and so on. The measurement results may be output to the control section 301.

### (User Terminal)

A user terminal communicates with a radio base station that uses multiple types of beamforming, and is controlled to receive DL signals transmitted from the radio base station, and transmit a PRACH that contains beam information that relates to the beams of the radio base station. This user terminal may be controlled to transmit a PRACH containing beam information a number of times in different transmission time intervals. Furthermore, this user terminal may use a predetermined PRACH sequence configured in association with beam information to transmit a plurality of PRACHs. This user terminal may receive information about the associations between beam information and PRACH sequences and/or information about number of times a PRACH is transmitted.

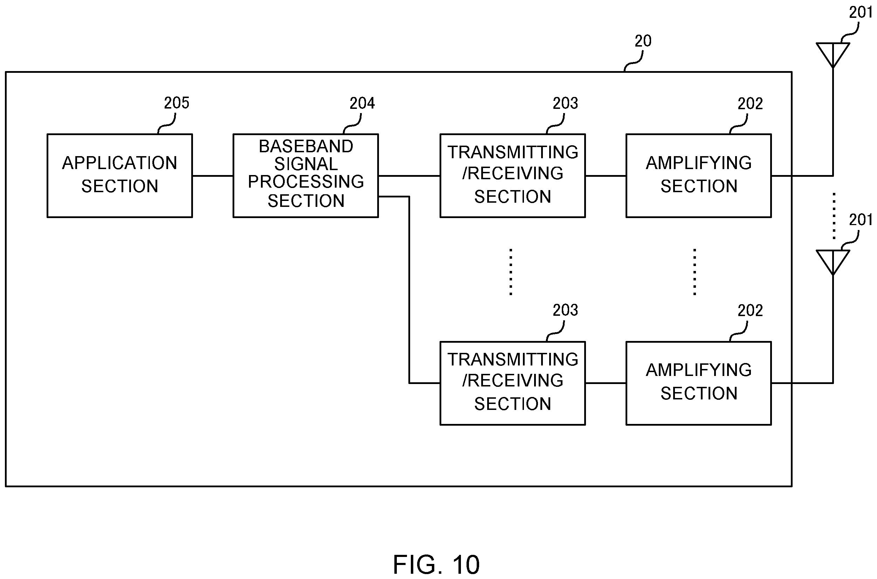

FIG. 10 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process and so on. Downlink user data is forwarded to the application section 205. The application section 205 performs processes related to higher layers above the physical layer and the MAC layer and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may furthermore have an analog beam forming section that forms analog beams. The analog beam forming section may be constituted by an analog beam forming circuit (for example, a phase shifter, a phase shifting circuit, etc.) or analog beam forming apparatus (for example, a phase shifting device) that can be described based on general understanding of the technical field to which the present invention pertains. Furthermore, the transmitting/receiving antennas 201 may be constituted by, for example, array antennas. In addition, the transmitting/receiving sections 203 are structured so as to be capable of single-BF and multiple-BF operations.

The transmitting/receiving sections 203 may receive a reference signal (for example, DMRS) for beam pattern measurement. Also, the transmitting/receiving sections 203 may receive DCI via a DL control channel. In addition, the transmitting/receiving sections 203 may receive DL data (including higher layer control information) via a DL data channel.

In addition, the transmitting/receiving sections 203 receive command information related to beam selection via higher layer signaling and/or physical layer signaling. This command information may include at least one of the above-described transmission mode information, DMRS pattern information (pattern information) and CSI-related information.

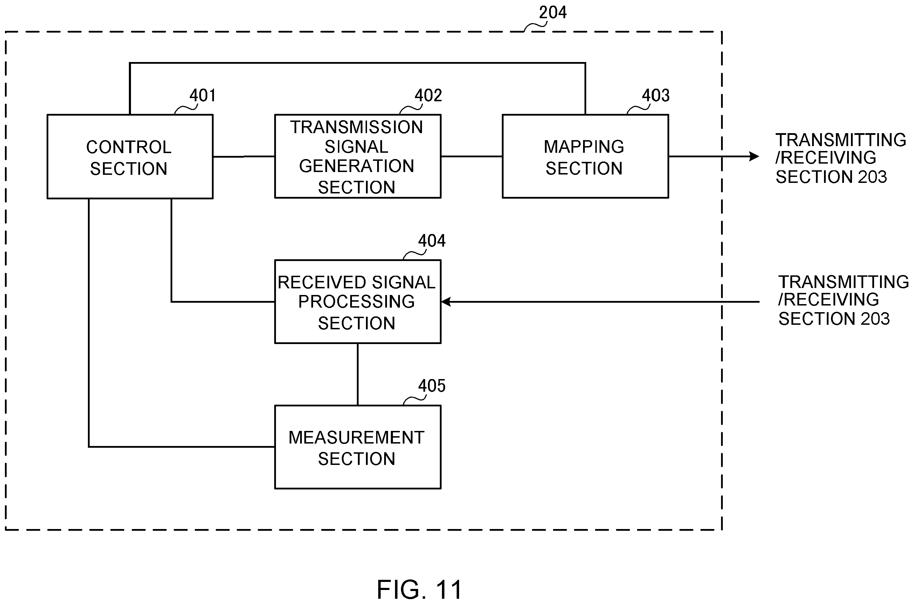

FIG. 11 is a diagram to show an example of a functional structure of a user terminal according to present embodiment. Note that, although this example primarily shows functional blocks that pertain to characteristic parts of present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 obtains a downlink control signal (DL control channel) and a downlink data signal (DL data channel) transmitted from the radio base station 10 from the received signal processing section 404. The control section 401 controls the generation of uplink control signals (for example, delivery acknowledgement information and so on) and/or uplink data signals based on whether or not retransmission control is necessary, which is decided in response to downlink control signals and/or downlink data signals, and so on.

The control section 401 may exert control so that transmitting beams and/or receiving beams are formed using the digital BF (for example, precoding) by the baseband signal processing section 204 and/or the analog BF (for example, phase rotation) by the transmitting/receiving sections 203.

The control section 401 controls the beams to use in transmitting and/or receiving DL signals. To be more specific, when a DL signal is transmitted and/or received using one or more backup beams (candidate beams), the control section 401 may select beams based on the measurement results of the DMRSs (demodulation reference signals) of one or more DMRS ports (antenna ports) respectively corresponding to the backup beams.

Furthermore, the control section 401 may control the transmission modes that are applied to DL signals (for example, a DL data channel). These transmission mode may include at least one of a transmission mode for performing closed loop control, a transmission mode for beam selection (a transmission mode for DMRS-based semi-open loop control), and a transmission mode for performing open loop control.

In the transmission mode for beam selection (transmission mode for DMRS-based semi-open loop control), the control section 401 may control the measurement of the DMRSs of DMRS ports that corresponding to one or more backup beams, respectively.

To be more specific, when the transmission mode information indicates the transmission mode for beam selection (the transmission mode for DMRS-based semi-open loop control) (or when this transmission mode is indicated as being valid), the control section 401 may control the measurements of the DMRSs of the DMRS ports that correspond to one or more backup beams, respectively.

Furthermore, the control section 401 may control the measurements of the DMRSs of the DMRS ports corresponding to one or more backup beams, respectively, based on DMRS pattern information (pattern information).

Also, control section 401 may control measurements (RSRP measurements) and/or CSI calculation. The CSI has only to include at least one of the beam index (BI) of a selected beam, the DMRS port indicator (DPI) corresponding to the selected beam, and the RSRP of the DMRS port corresponding to the selected beam. The control section 401 may control the transmission of CSI.

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

The transmission signal generation section 402 generates feedback information (for example, at least one of an HARQ-ACK, CSI and a scheduling request) based on, for example, a command from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals, the signals after the receiving processes and so on, to the measurement section 405.

The measurement section 405 conducts measurements with respect to the received signals. For example, the measurement section 405 performs measurements using the beamforming RS transmitted from the radio base station 10. The measurement section 405 can be constituted by a measurer, a measurement circuit or measurement apparatus that can be described based on general understanding of the technical field to which the present invention pertains.

The measurement section 405 may measure, for example, the received power (for example, RSRP), the received quality (for example, RSRQ, reception SINR), the channel states and so on of the received signals. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

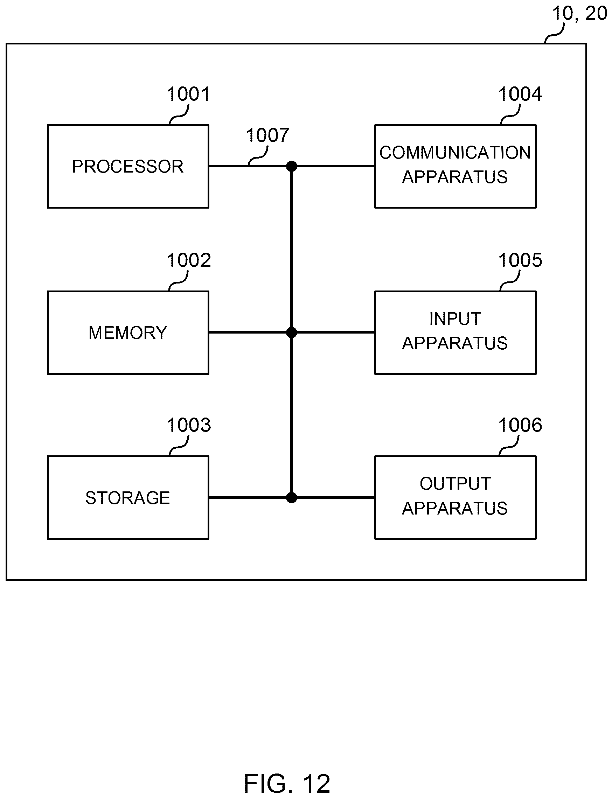

For example, the radio base station, user terminals and so on according to embodiments of the present invention may function as a computer that executes the processes of the radio communication method of the present invention. FIG. 12 is a diagram to show an example hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and/or the like for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time duration (for example, 1 ms) not dependent on the neurology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on neurology. Also, a slot may include a plurality of minislots. Each minislot may consist of one or more symbols in the time domain. Also, a minislot may be referred to as a "subslot."

A radio frame, a subframe, a slot, a minislot and a symbol all represent the time unit in signal communication. A radio frame, a subframe, a slot, a minislot and a symbol may be each called by other applicable names. For example, one subframe may be referred to as a "transmission time interval" (TTI), or a plurality of consecutive subframes may be referred to as a "TTI," or one slot or minislot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "minislot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the time interval (for example, the number of symbols) in which transport blocks, code blocks and/or codewords are actually mapped may be shorter than the TTI.

Note that, when one slot or one minislot is referred to as a "TTI," one or more TTIs (that is, one or more slots or one or more minislots) may be the minimum time unit of scheduling. Also, the number of slots (the number of minislots) to constitute this minimum time unit of scheduling may be controlled.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," "a partial TTI (or a "fractional TTI"), a "shortened subframe," a "short subframe," a "minislot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (PRB: Physical RB)," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, minislots, symbols and so on described above are merely examples. For example, configurations pertaining to the number of subframes included in a radio frame, the number of slots included in a subframe, the number of minislots included in a slot, the number of symbols and RBs included in a slot or a minislot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be transmitted to other pieces of apparatus. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information" (L1/L2 control signals), "L1 control information" (L1 control signal) and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

Note that the radio communication system 1 may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Global System for Mobile communications) (registered trademark), CDMA 2000, UMB (Ultra Mobile Broadband), IEEE 802.11 (Wi-Fi (registered trademark)), IEEE 802.16 (WiMAX(registered trademark)), IEEE 802.20, WB (Ultra-WideBand), Bluetooth (registered trademark) and other appropriate radio communication technologies, and/or may be applied to next-generation systems that are enhanced base on these radio communication technologies.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2017-001436, filed on January 6, 2017, including the specification, drawings and abstract, is incorporated herein by reference in its entirety.

## Claims

1. A user terminal comprising:
a receiving section that receives a DL signal; and
a control section that controls a beam to use to transmit and/or receive the DL signal,
wherein, when the DL signal is transmitted and/or received using one or more candidate beams, the control section selects a beam based on measurement results of demodulation reference signals of one or more antenna ports that respectively correspond to the one or more candidate beams.

2. The user terminal according to claim 1, wherein, when the DL signal is transmitted and/or received using different candidate beams, different frequency resources in the same slot are allocated.

3. The user terminal according to claim 1 or claim 2, wherein:
the receiving section receives transmission mode information, which indicates that the DL signal is transmitted and/or received using the one or more candidate beams; and
the control section controls measurements of the demodulation reference signals of the one or more antenna ports based on the transmission mode information.

4. The user terminal according to one of claim 1 to claim 3, wherein:
the receiving section receives pattern information that indicates an arrangement pattern of the demodulation reference signals of the one or more antenna ports; and
the control section controls the measurements of the demodulation reference signals of the one or more antenna ports based on the pattern information.

5. The user terminal according to one of claim 1 to claim 4, further comprising a transmission section that transmits channel state information, which includes at least one of an index of the selected beam, an indicator of an antenna port corresponding to the selected beam, and the received power of a demodulation reference signal of the antenna port corresponding to the selected beam.

6. A radio communication method comprising, in a user terminal, the steps of:
receiving a downlink (DL) signal; and
controlling a beam to use to transmit and/or receive the DL signal,
wherein, when the DL signal is transmitted and/or received using one or more candidate beams, the user terminal selects the beam based on measurement results of demodulation reference signals of one or more antenna ports that respectively correspond to the one or more candidate beams.
